# EUROPEAN PATENT APPLICATION

(11) **EP 4 190 160 A1**
(43) Date of publication of application: **07.06.2023**
(21) Application number: 22208839.5
(22) Date of filing: 22.11.2022
(51) Int. Cl.: A23B 7/005, A23L 2/10, A23L 3/00, A23L 3/22, A23L 19/00, B01D 1/26

(54) **METHOD AND PLANT FOR THE PRODUCTION OF TOMATO CONCENTRATE WITH VAPOUR RECOVERY**

(30) Priority: 02.12.2021 IT 202100030533
(71) Applicant: Ing. A. Rossi Impianti Industriali - Societa' a Responsabilita' Limitata, 43122 Parma (IT)
(72) Inventor: ROSSI, Giovanni, 43056 GAINAGO DI TORRILE (PR) (IT); ROSSI, Francesco, 43121 PARMA (IT)
(74) Representative: Corradini, Corrado

(57) **Abstract**

A method for the production of tomato concentrate is described, comprising the steps of: chopping the tomato so as to obtain chopped tomato with peels and seeds, subjecting the chopped tomato with peels and seeds to an enzymatic deactivation process, subjecting the chopped tomato with peels and seeds to an extraction process to obtain a tomato juice, subjecting said tomato juice to an evaporation process to obtain a concentrated juice and vapour, using said vapour to heat the chopped tomato with peels and seeds before subjecting it to the extraction process.

## Description

### Technical Field

The present invention relates to a method and a plant for the production of tomato concentrate.

### Prior art

It is well known that the production of tomato concentrate begins with a chopping step, during which the whole tomatoes are chopped up into a pumpable mass containing chopped tomato with the relative peels and seeds.

This chopped tomato with peels and seeds is then subjected to an enzymatic deactivation process, which essentially takes the form of a heating or blanching step that makes it possible to block the activity of the pectolytic enzymes responsible for the hydrolysis of the polysaccharides that make up the structure of the tomato and the consequent pulp-serum separation.

Depending on the temperature value to which the chopped tomato is brought and on the time required to reach this temperature value, the enzymatic deactivation process is generally called Hot Break (high temperatures in short times) or Cold Break (lower temperatures in longer times).

At the end of the enzymatic deactivation process, the chopped tomato with peels and seeds is subjected to a hot extraction process, for example inside special centrifugal turbo-extractors, which allows to separate the peels and seeds and thus to obtain a tomato juice substantially devoid of solid parts.

This tomato juice is finally evaporated, in order to reduce the amount of water present therein, until a concentrated juice is obtained at the desired concentration.

A first stage of the evaporation process may occur in a spontaneous way within a storage tank which may be located downstream of the extractors and in which the tomato juice is collected waiting for being further processed.

A second stage of the evaporation process is then generally carried out using evaporators in which the tomato juice, coming for example from the above-mentioned storage tank, is heated so as to cause the evaporation of a part of the water contained therein which separates from the solute in the form of vapour.

In order to reduce the energy consumption of the evaporators, at least part of the vapour thus obtained is sometimes reused within the same evaporator, or in other evaporators arranged in series with the first one, as a heating fluid suitable for heating the tomato juice.

An example of this technology is represented by mechanical compression evaporators and/or by evaporators that are connected in a multi-stage pattern.

In this way, by releasing heat to the tomato juice, the vapour tends to cool and form a liquid condensate which is purified and finally disposed of in the sewer systems.

However, not all the vapour manages to condense in this step, so that a certain amount of vapour at a rather high temperature is still available at the outlet of the evaporator, especially in the case of mechanical compression evaporators, which must be disposed of.

However, the disposal of this residual vapour constitutes a rather significant energy loss and sometimes also implies additional costs, as the vapour has to be condensed inside an additional water heat exchanger to dissipate its heat before it can be released.

### Disclosure of the invention

In the light of the foregoing, an object of the present invention is to provide a method and a plant for the production of tomato concentrate which allow an optimisation of energy consumptions and possibly a reduction in the costs of disposal of hot vapours coming from the evaporation systems.

Another object is that of achieving the mentioned objective within the context of a simple, rational and relatively cost effective solution.

These and other objects are reached thanks to the characteristics of the invention as set forth in the independent claims. The dependent claims outline preferred and/or particularly advantageous aspects of the invention but not strictly necessary for its attainment. In particular, an embodiment of the present invention makes available a method for the production of tomato concentrate, comprising the steps of:
- chopping the tomato so as to obtain chopped tomato with peels and seeds,
- subjecting the chopped tomato with peels and seeds to an enzymatic deactivation process,
- subjecting the chopped tomato with peels and seeds to an extraction process to obtain a tomato juice,
- subjecting said tomato juice to an evaporation process to obtain a concentrated juice and vapour, and
- using said vapour to heat the chopped tomato with peels and seeds before subjecting it to the extraction process.

Thanks to this solution, at least part of the heat of the vapour is advantageously used for heating the chopped tomato with peels and seeds, consequently reducing the energy expenditure required to perform the enzymatic deactivation step and thus improving the overall energy efficiency of the method.

At the same time, by releasing heat to the chopped tomato with peels and seeds, the vapour cools and condenses, thus being able to be disposed of with lower costs and problems than the prior art.

According to a first embodiment of the invention, the vapour obtained from the evaporation of the tomato juice can be used to preheat the chopped tomato with peels and seeds, before subjecting it to the enzymatic deactivation process.

In this way it is advantageously possible to reduce the thermal delta to be imposed on the chopped tomato with peels and seeds during the enzymatic deactivation process, reducing the energy consumption attributable to the execution of this process step.

In particular, the preheating of the chopped tomato with peels and seeds can be obtained by placing the latter inside a heat exchanger in a heat exchange relation with said vapour. This aspect of the invention represents a particularly simple and effective solution for transferring heat from vapour to the chopped tomato with peels and seeds.

According to an alternative embodiment of the present invention, the vapour obtained from the evaporation of the tomato juice can be directly used to heat the chopped tomato with peels and seeds in the enzymatic deactivation process.

In this way, the thermal delta to be imposed on the chopped tomato with peels and seeds during the enzymatic deactivation process remains unchanged compared to known solutions, but part of the heat required to generate this thermal delta is supplied directly by the vapour obtained from the evaporation process, reducing the overall energy consumption.

In particular, the enzymatic deactivation process may provide that the chopped tomato with peels and seeds repeatedly passes through a heat exchanger, in which the chopped tomato with peels and seeds is placed in a heat exchange relation with the vapour obtained from the evaporation of the tomato juice.

This solution makes it possible to use the vapour obtained from the evaporation of the tomato juice, to carry out a Hot Break type enzymatic deactivation of the chopped tomato with peels and seeds.

In this and other contexts, a preferred aspect of the invention provides that the vapour obtained from the evaporation of the tomato juice can be compressed, before being used to heat the chopped tomato with peels and seeds in the enzymatic deactivation process. By means of this compression step it is advantageously possible to increase the temperature of the vapour, allowing it to reach values capable of obtaining a more effective enzymatic deactivation of the chopped tomato with peels and seeds.

In particular, vapour compression can be obtained by means of an ejector.

An ejector is basically a device in which a primary fluid at higher pressure, generally exploiting a Venturi effect, sucks and mixes with a secondary fluid at lower pressure, thus generally obtaining a fluid mixture at intermediate pressure.

In this way, the ejector does not require any mechanical drive to compress the secondary fluid, but only uses the energy of the primary fluid.

In the case in question, the primary fluid may be vapour produced by a separate boiler which, by mixing with the vapour obtained from the evaporation of the tomato juice, generally produces a flow of vapour at a sufficiently high temperature to carry out the enzymatic deactivation of the chopped tomato with peels and seeds.

By recovering the heat of the vapour obtained from the evaporation of the tomato juice, the boiler will therefore consume less energy than if it had to produce, by itself, all the vapour necessary to carry out the enzymatic deactivation.

According to a preferred aspect of the invention, before being used to heat the chopped tomato with peels and seeds, the vapour obtained from the evaporation of the tomato juice can be partially transformed into condensate, placing it in a heat exchange relation with other tomato juice in the evaporation process.

In this way, the heat of the vapour arising in the evaporation process can be advantageously recovered in two stages.

In the first stage, part of the vapour condenses and releases heat to the tomato juice, causing and/or supporting the evaporation thereof.

In the second stage, the residual (or excess) vapour that is not condensed is used to heat the chopped tomato with peels and seeds.

In this context, another aspect of the invention provides for the possibility of also using the condensate to preheat the chopped tomato with peels and seeds, before subjecting it to the enzymatic deactivation process.

Thanks to this solution, at least part of the heat of the condensate is advantageously used for heating the chopped tomato with peels and seeds, consequently reducing the energy expenditure necessary to carry out the subsequent enzymatic deactivation step and thus further improving the overall energy efficiency of the method.

At the same time, as a result of this preheating, the condensate cools down and can therefore be disposed of at a lower cost and with fewer problems than the prior art. According to one aspect of the invention, the preheating obtained with the condensate can be carried out before heating the chopped tomato with peels and seeds with the vapour.

In this way, the heat balance of the entire process is advantageously improved. According to one aspect of the invention, the preheating of the chopped tomato with peels and seeds can be obtained by placing the latter inside at least one heat exchanger in a heat exchange relation with said condensate obtained from the evaporation process. This solution provides a very simple and relatively inexpensive way to transfer heat from the condensate to the chopped tomato with peels and seeds.

According to another preferred aspect of the invention, the vapour obtained from the evaporation of the tomato juice can be compressed, before being partially transformed into condensate.

Thanks to this compression, the temperature of the vapour increases and therefore allows a more effective heating of the tomato juice in the evaporation process.

By way of example, vapour compression can be obtained by means of a mechanical compressor, for example a rotary compressor, preferably of the centrifugal type.

The evaporation process can be obtained by means of at least one film evaporator, for example a falling film evaporator.

However, it is not excluded that, in other embodiments, the evaporation process can be obtained by means of other types of evaporators, e.g. by means of conventional evaporators provided with a full-flow heat exchanger and a separate phase separation chamber. However, another aspect of the invention provides that the evaporation process may be obtained by means of a plurality of evaporators connected according to a multiple-stage pattern.

This solution also has the advantage of optimising the energy consumption involved in the production of the tomato concentrate.

According to a possible embodiment of the invention, at least part of (or possibly all) the vapour used to heat the chopped tomato with peels and seeds may be taken from a storage tank, preferably maintained at lower pression than the atmospheric pression, in which the tomato juice is (simply) collected after the extraction step, for example before being delivered to the evaporator.

In this way, the vapour (called flesh vapour), which is released by the tomato juice when, passing into the storage tank, its pressure decreases with the respect to the pressure it had in the preceding steps, is advantageously recovered.

By recovering this flash vapour from the storage tank is not only possible to achieve and effective recovering of its heat, but it is also possible to prevent further processing of this vapour (e.g. its compression in the compressor that may be associated to the following evaporator), thereby reducing energy consumption and/or the size of the devices used to this purpose.

According to another aspect of the invention, the enzymatic deactivation process can be obtained with a Hot Break treatment.

The Hot Break treatment has the advantage of raising the temperature of the chopped tomato with peels and seeds to significantly high temperatures, even higher than 90°C (e.g. 95-96°C), in rather short times, obtaining a very efficient enzymatic deactivation. As already outlined above, this Hot Break treatment can be obtained by means of a heat exchanger in which the chopped tomato with peels and seeds is placed in a heat exchange relation with high temperature vapour, for example with vapour produced by a boiler possibly mixed with vapour obtained from the evaporation of the tomato juice, and at least one recirculation duct suitable for bringing a relevant part of the aforesaid chopped tomato with peels and seeds from the outlet of the heat exchanger back to the inlet, creating a recirculation.

However, it is not excluded that, in other embodiments, the enzymatic deactivation process can take place with a Cold Break treatment, in which the chopped tomato with peels and seeds is brought to generally lower temperatures, e.g. between 60°C and 73°C, in generally longer times, in order to make the temperature increase more gradual and reduce thermal shocks.

This Cold Break treatment can be obtained by simply passing the tomato with peels and seeds inside a heat exchanger, without recirculation tubes, in which it is placed in a heat exchange relation with boiler vapour and/or with the vapour produced by the evaporation of the tomato juice.

Another aspect of the invention provides that the extraction process can be obtained by means of a turbo-extractor.

This aspect provides an extremely efficient and reliable solution for separating tomato juice from peels and seeds.

In addition to the method outlined above, the invention provides a corresponding plant for the production of tomato concentrate, which comprises:
- a chopper for chopping the tomato so as to obtain a chopped tomato with peels and seeds,
- an enzyme deactivator for subjecting the chopped tomato with peels and seeds to an enzymatic deactivation process,
- an extractor for subjecting the chopped tomato with peels and seeds to an extraction process to obtain a tomato juice,
- means for subjecting said tomato juice to an evaporation process to obtain a concentrated juice and vapour, and
- at least one heat exchanger adapted to use said vapour to preheat the chopped tomato with peels and seeds before subjecting it to the extraction process.

This embodiment of the invention substantially achieves the same advantages outlined above with regard to the method, in particular that of improving the overall energy efficiency of the production of tomato concentrate, while at the same time reducing the difficulties in disposing of the vapour obtained during the evaporation process.

All the accessory aspects of the invention which have been outlined with reference to the method are understood to be naturally applicable, *mutatis mutandis,* also to the corresponding plant.

In particular, the means for subjecting the tomato juice to the evaporation process may comprise a (simple) storage tank, preferably maintained at a lower pression than the atmospheric pression, in which the tomato juice is collected and evaporated in a substantially spontaneous way (i.e. due to the fall of pressure to which it is subjected in said storage tank).

Alternatively or in addition, the means for subjecting the tomato juice to the evaporation process can comprise at least one evaporator, for example at least one film evaporator (e.g. with falling film), a traditional evaporator equipped with a full flow heat exchanger and a separate phase separation chamber or any other type of evaporator, with or without vapor compression.

### Brief description of the drawings

Further features and advantages of the invention will be more apparent after reading the following description provided by way of non-limiting example, with the aid of the accompanying drawings.
Figure 1 is the diagram of a plant for the production of tomato concentrate according to an embodiment of the present invention.
Figure 2 is an enlarged diagram of an evaporator installed in the plant of Figure 1.
Figure 3 shows a module of a heat exchanger that can be used to carry out a preheating step in the plant of Figure 1.
Figure 4 shows an example of a heat exchanger that can be used to carry out a preheating step in the plant of Figure 1.
Figure 5 is the diagram of a plant for the production of tomato concentrate according to an alternative embodiment of the present invention.
Figure 6 is a variant of the plant of figure 1.
Figure 7 is a variant of the plant of figure 5.
Figure 8 is the diagram of a plant for the production of tomato concentrate according to a third embodiment of the present invention.
Figure 9 is the diagram of a plant for the production of tomato concentrate according to a fourth embodiment of the present invention.

### Detailed description

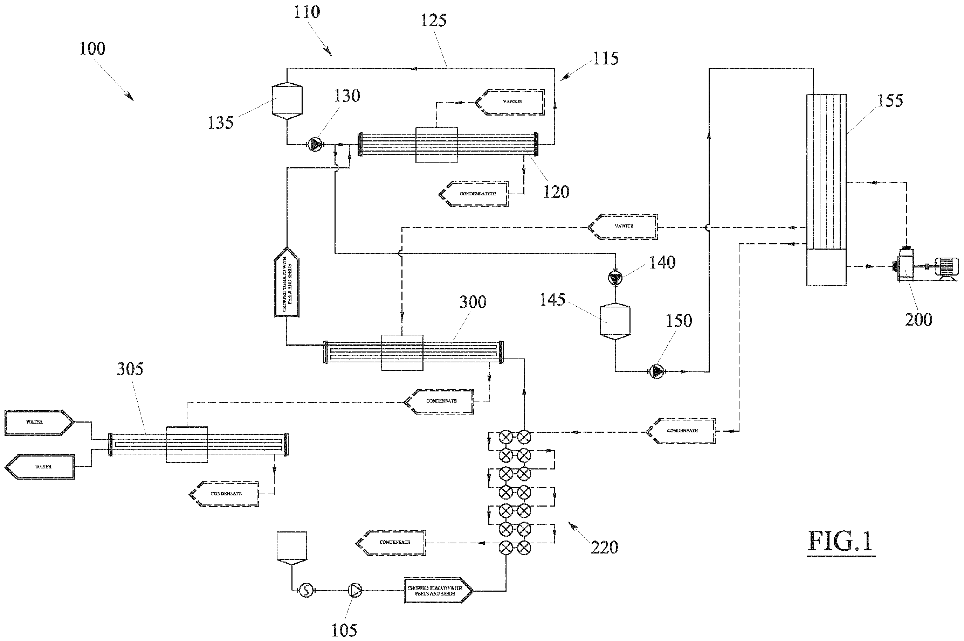

The aforementioned Figure 1 shows a plant 100 for the production of tomato concentrate. The plant 100 initially comprises a chopper 105, which is adapted to receive the whole tomatoes after the latter have possibly been subjected to a sorting and washing step. The chopper 105 allows the tomatoes to be chopped up, so as to obtain a pumpable product comprising chopped tomato together with the relative peels and seeds.

At the outlet of the chopper 105, the plant 100 may comprise means suitable for subjecting the chopped tomato with peels and seeds to a preheating step (in one or more stages) to which reference will be made later.

After this possible preheating step, the chopped tomato with peels and seeds is conveyed to an enzymatic deactivator 110, which is generally adapted to heat (blanch) the chopped tomato with peels and seeds, so as to block the activity of the pectolytic enzymes which are responsible for the hydrolysis of the polysaccharides that make up the tomato structure and the consequent pulp-serum separation.

In the illustrated embodiment, the enzymatic deactivator 110 implements a Hot Break treatment, thanks to which the chopped tomato with peels and seeds is heated very quickly up to temperatures above 90°C, for example equal to about 95-96°C.

In order to perform this type of treatment, the enzymatic deactivator 110 may comprise a hydraulic circuit 115 in which the chopped tomato with peels and seeds can be circulated several times.

This hydraulic circuit 115 comprises a heat exchanger 120, in which the chopped tomato with peels and seeds is placed in a heat exchange relation with high temperature vapour, e.g. at about 130°C, which may be produced, in whole or in part, by a separate boiler. The hydraulic circuit 115 also comprises a recirculation duct 125 which brings the chopped tomato with peels and seeds from the outlet of the heat exchanger 120 back to the inlet thereof.

Along this recirculation duct 125, a pump 130 may be arranged which is adapted to circulate the chopped tomato with peels and seeds within the hydraulic circuit 115, and possibly a storage tank 135 interposed between the outlet of the heat exchanger 120 and said pump 130.

The chopped tomato with peels and seeds coming from the chopper 105 is introduced into the recirculation duct 125, for example at a point comprised between the pump 130 and the inlet of the exchanger 120.

In this way, a much greater flow rate of chopped tomato with peels and seeds than that coming from the chopper 105 is constantly recirculated within the hydraulic circuit 115 and which is kept at a high temperature by the continuous recirculation through the heat exchanger 120.

The chopped tomato with peels and seeds coming from the chopper 105 is then added and mixed with this mass, rapidly increasing its temperature up to values close to the ones of steady operation, which are finally reached more slowly and progressively. After this heating step, which is responsible for the enzymatic deactivation, the chopped tomato with peels and seeds is taken from the hydraulic circuit 115 through one or more outlet ducts, which may derive from the recirculation duct 125, for example from a section comprised between the outlet of the heat exchanger 120 and the point of entry of the chopped tomato with peels and seeds coming from the chopper 105.

In particular, the enzymatic deactivator 110 may comprise an outlet duct deriving from a section of the recirculation duct 125 comprised between the pump 130 and the point of entry of the chopped tomato with peels and seeds coming from the chopper 105. Although an enzymatic deactivator 110 implementing a Hot Break treatment has been described, it is not excluded that, in other embodiments, the enzymatic deactivator 110 may be set up to perform a Cold Break treatment, thanks to which the chopped tomato with peels and seeds is heated more slowly and until generally lower temperatures are reached, for example between 65°C and 73°C, in order to make the temperature increase more gradual and reduce thermal shocks.

In this case, the enzymatic deactivator 110 could comprise a heat exchanger adapted to place the chopped tomato with peels and seeds in a heat exchange relation with a vapour, e.g. produced by a boiler, but it could be without any recirculation duct, so that the chopped tomato with peels and seeds is heated only due to the effect of passing through the heat exchanger.

Regardless of this, after having undergone the enzymatic deactivation process, the chopped tomato with peels and seeds leaving the enzymatic deactivator 110 is conveyed towards one or more extractors 140, where it is subjected to an extraction process. The extraction process allows to extract the tomato juice, separating it from the peels and the seeds.

This separation can be complete or only partial depending on the final product it is wished to be obtained.

For example, in the case of tomato juices intended for the production of pizza sauce, rustic purees and similar products, the extraction process may involve discarding most of the peels, but leaving a certain percentage of peels and seeds in the juice.

The extractors 140 can be, for example, centrifugal turbo-extractors already known in the industry.

In particular, these extractors 140 may comprise centrifugal impellers which force the chopped tomato with peels and seeds to pass through sieves with progressively smaller and smaller holes (typically from 1.2 to 0.5 mm in diameter).

The sieves with larger holes (e.g. 1.2 mm) allow removing seeds, stalks, large green parts and most of the peels, whereas the sieves with smaller holes (e.g. 0.8-0.5 mm) allow eliminating seed and peel fragments and other particles that escaped the previous sieving, obtaining a refined tomato juice.

In some cases, for example in case of pizza sauce, the sieves may have holes of larger dimensions, for example between 4 and 5 mm.

Although a multi-stage extraction mode has been described, it is not ruled out that the extraction step can be carried out in single-stage mode, i.e. by means of a single passage of the chopped tomato with peels and seeds through a single sieve with the desired holes. After the extraction, the tomato juice obtained at the outlet from the extractors 140 may possibly be accumulated in a collecting tank (not shown), usually having quite large dimensions and usually at atmospheric pression, which acts as a lung for continuously feeding the subsequent steps.

From the collecting tank, the tomato juice may be distributed into one or more storage tanks, usually smaller.

However, it is not ruled out that, according to other embodiments, the tomato juice coming from the extractors 140 is fed in the storage tank(s) 145, without passing through the collecting tank.

In any case, each storage tank 145 is preferably maintained under vacuum condition, namely at a pressure which is lower than the atmospheric pressure.

Inside this storage tank 145, the tomato juice is subjected to a first phase of essentially spontaneous evaporation, i.e. which occurs simply as a result of the pressure drop to which the tomato juice is subjected in the passage between the extraction within the extractors 140 (or the waiting within the collecting tank) and the collection inside the storage tank 145.

In practice, a flash vapor separates from the tomato juice which collects at the bottom of the storage tank 145 and generally remains confined to the upper part of the storage tank 145 itself.

In any case, the temperature of the vapor which separates in the storage tank 145 is relatively due to the preceding step of enzymatic deactivation, typically at temperatures above 70-75 ° C.

Usually, the temperature of the vapour separated inside the storage tank 145 is comprised between 75°C and 85°C.

After possibly being stored in this storage tank 145, the tomato juice coming from the extraction step may be fed, for example by means of a pump 150, into at least one evaporator 155 to be subjected to a second (an more intense) phase of the evaporation process.

Thanks to this second phase of the evaporation process, ad additional part of the water contained in the tomato juice is evaporated and, in this way, separated from the solute, obtaining tomato concentrate.

In the embodiment illustrated herein, the evaporator 155 is inserted in a vapour compression pattern, in which the vapour obtained from the evaporation of the tomato juice is mechanically compressed, so as to bring it to a higher pressure and temperature, and subsequently reused in the same evaporator 155, where it is placed in a heat exchange relation with the tomato juice to be evaporated.

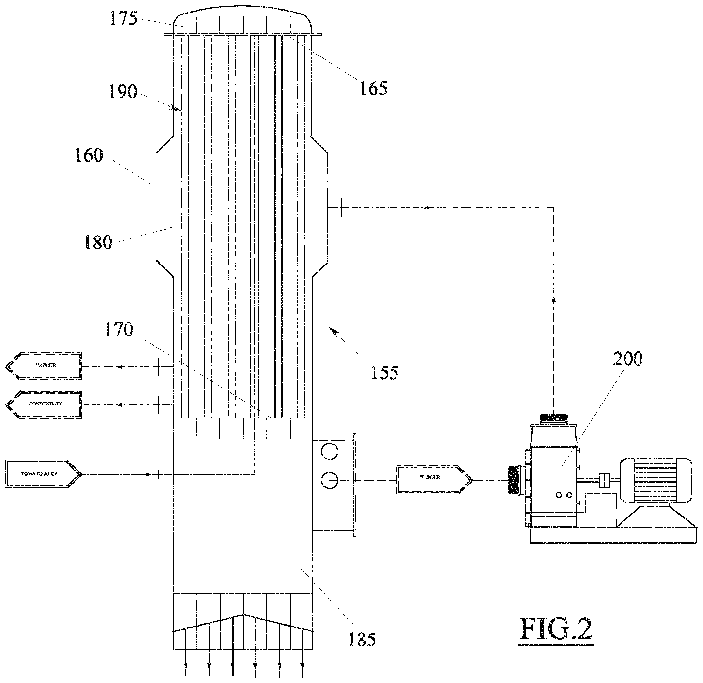

In the context of this pattern, the evaporator 155 may comprise an external casing 160 (see fig.2), the internal volume of which is divided by a pair of separating baffles 165 and 170 into three distinct chambers, of which an upper chamber 175, an intermediate chamber 180 comprised between the two separating baffles 165 and 170, and a lower chamber 185.

A tube bundle 190 formed by a plurality of substantially vertically oriented tubes, each of which is adapted to put the upper chamber 175 in communication with the lower chamber 185, may be housed inside the intermediate chamber 180.

The tomato juice is fed into the upper chamber 175, so that by gravity it tends to flow along the tubes of the tube bundle 190, forming a kind of layer or film which flows adhering to the internal surfaces of the tubes, leaving them centrally clear.

The external surfaces of the same tubes are simultaneously lapped by a hot vapour, for example at a temperature above 80°C, which will be specified later and the effect of which is to heat the tubes and the film of tomato juice inside them, causing part of the water contained in it to evaporate.

In this way, both the concentrated tomato juice and the vapour produced by the evaporation of the tomato juice itself are collected in the lower chamber 185.

The concentrated tomato juice taken from the lower chamber 185 may be returned to the inside of the evaporator 155 or to the inside of other evaporators 155 arranged in series according to a multi-stage pattern, until a tomato concentrate having a desired concentration is obtained.

Alternatively, or at the end of the various evaporation stages, the tomato concentrate can be collected in one or more storage tanks while waiting, for example, to be conveyed to the filling machines that package it.

The evaporator 155 described above is generally known as a falling film evaporator. However, it is not excluded that, in other embodiments, the evaporator 155 may be of another type, for example a forced circulation or hybrid circulation evaporator.

In a forced circulation evaporator, the tomato juice runs through the tube bundle 190 of the evaporator 155 due to the effect of the hydraulic thrust exerted by the circulation pump.

In such a case, the evaporator 155 need not be vertically oriented and the tubes of the tube bundle 190 are completely filled with tomato juice, the evaporation of which takes place within the chamber 185 or in a tank communicating with it.

In a hybrid circulation evaporator the tomato juice runs through the tube bundle 190 of the evaporator due to the combined effect of the hydraulic thrust of the circulation pump and the acceleration by gravity.

In such a case, each tube of the tube bundle 190 may be partly filled with tomato juice and partly traversed by a film of tomato juice which leaves it centrally empty, thus obtaining an intermediate operation between those previously outlined.

In all cases, the vapour that has been separated from the tomato juice may be taken from the evaporator 155, for example from the chamber 185, and conveyed towards the inlet of a compressor 200, for example of a turbine compressor (or turbo-compressor). Before reaching this compressor 200, the vapour may possibly be passed through a separator, for example a centrifugal separator, suitable for retaining the droplets of liquid transported by the vapour and for returning them, for example, to the inside of the chamber 185 of the evaporator 155.

The function of the compressor 200 is to increase the pressure and, consequently, the temperature of the vapour.

The vapour thus recovered and heated is then conveyed inside the intermediate chamber 180 of the evaporator 155, where it heats the tubes of the tube bundle 190 to cause/support the evaporation of more tomato juice, according to the methods outlined above.

By releasing heat to the tomato juice, at least part of this vapour condenses inside the intermediate chamber 180 of the evaporator 155, passing into liquid form.

This condensate may then be taken from the second intermediate chamber 180, whereas the residual (or excess) vapour may be taken from the intermediate chamber 180 (at a higher temperature, e.g. above 80°C) or from the chamber 185 (before compression and at a lower temperature, e.g. about 75°C).

Although an evaporator 155 with mechanical compression has been described, it is not excluded that, in other embodiments, the evaporation process can be obtained by means of other types of evaporators, e.g. by means of classical evaporators provided with a full-flow heat exchanger and a separated separation chamber, possibly connected according to multi-effect patterns, in which the vapour obtained from the evaporation of the tomato juice is nevertheless made to condense, possibly without a compression step, to supply heat useful for supporting the evaporation process.

In any case, the condensate that has been obtained in the evaporator 155 as a result of the condensation of the vapour previously separated from the tomato juice is still at a high temperature.

This temperature can be higher than 80°C in the case of evaporators with vapour compression, but can also be close to 60°C even in the case of evaporators without compression.

For this reason, the condensate obtained from the condensation of the vapour separated from the tomato juice can be advantageously used to preheat the chopped tomato with peels and seeds, after the chopping step and before the enzymatic deactivation step. For this purpose, the plant in Figure 1 comprises a heat exchanger 220 in which the chopped tomato with peels and seeds is placed in a heat exchange relation with the condensate.

In particular, the heat exchanger 220 can be a countercurrent heat exchanger, so as to significantly lower the temperature of the condensate and at the same time obtain a rather rapid heating of the chopped tomato with peels and seeds.

For example, the heat exchanger 220 can be sized so that the temperature of the condensate at the outlet of the exchanger is lower than 45°C, for example about 42°C or more preferably about 40°C, so that it can be directly disposed of in a sewer system, without the need for further cooling inside cooling towers or similar devices. Furthermore, the heat exchanger 220 may be sized so that the chopped tomato with peels and seeds is able to reach the intended preheating (e.g. a temperature comprised between 40°C and 50°C) with a residence time inside the heat exchanger 200 of less than 60 seconds.

For these and other reasons, the heat exchanger 220 can be built according to a tube-in-tube (or double tube or concentric tube) architecture, which also has the advantage of offering a larger passage section for the chopped tomato with peels and seeds, avoiding the risk of clogging.

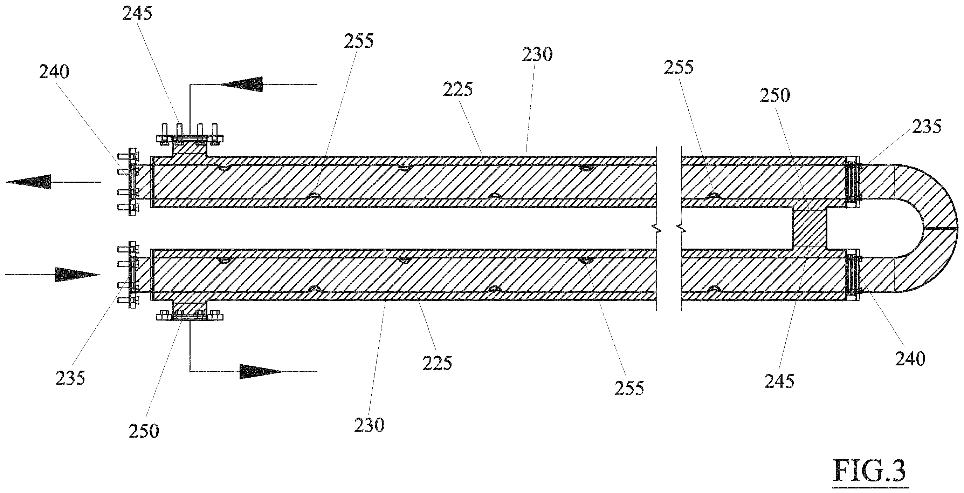

In practice, the heat exchanger 220 may comprise at least one base element formed by two concentric tubes (see Figure 3), of which an internal tube 225, in which the chopped tomato with peels and seeds can flow, and an external tube 230 or jacket which, together with the internal tube 225, defines an annular interspace, in which the hot condensate can flow, preferably in the opposite direction with respect to the chopped tomato with peels and seeds.

For this purpose, the opposite axial ends of the internal tube 225 may respectively define an inlet 235 and an outlet 240 for the chopped tomato with peels and seeds, while the external tube 230 may comprise an inlet nozzle 245 for the condensate, placed in proximity to the outlet 240 of the internal tube 225, and an outlet nozzle 250 for the condensate, placed in proximity to the inlet 235.

In order to improve the stirring of the chopped tomato with peels and seeds and, consequently, the efficiency of heat exchange with the condensate, the internal tube 225 may be provided with a plurality of protrusions 255 which protrude from the wall of the tube towards the inside of the same.

These protrusions 255, which can be made in the form of dimples formed in the wall of the internal tube 225, can be suitably distributed along the entire longitudinal development thereof, so as to increase the turbulence of the chopped tomato with peels and seeds flowing inside it.

The base element described above can then be connected to other similar base elements, by means of suitable joints or fittings, so as to lengthen the path in which the chopped tomato with peels and seeds and the condensate remain in a heat exchange relation.

For example, Figure 3 illustrates a prefabricated module formed by two base elements, wherein the outlet 240 of the internal tube 225 of a first base element (the lower one) is connected to the inlet 235 of the internal tube 255 of the second base element (the upper one) by means of an elbow fitting, and wherein the outlet nozzle 250 of the second base element (the upper one) is connected to the inlet nozzle 245 of the first base element (the lower one) by means of a straight fitting.

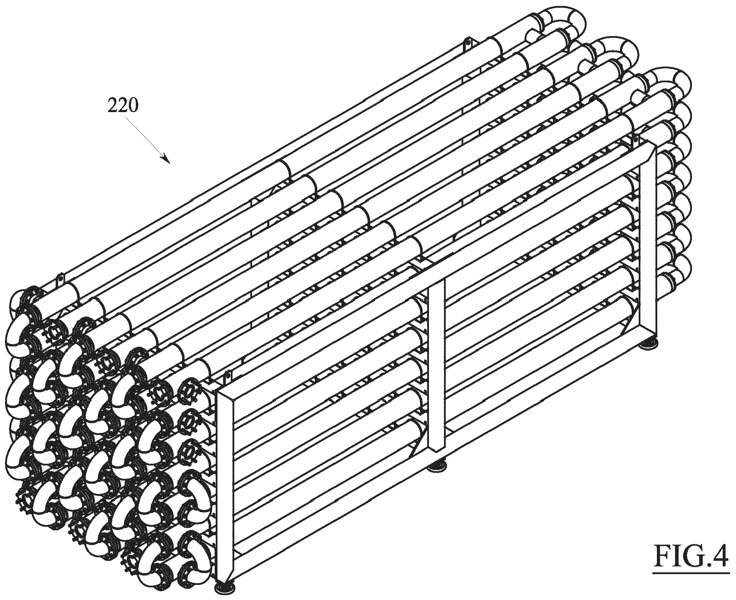

Naturally, the concepts of upper and lower refer to the figure and are merely explanatory. In this way, the chopped tomato with peels and seeds runs through the module starting from the inlet 235 of the internal tube 225 of the first base element (the lower one) towards the outlet 240 of the internal tube 225 of the second base element (the upper one), while the condensate flows countercurrently from the inlet nozzle 245 of the second base element (the upper one) to the outlet nozzle 250 of the first base element (the lower one). Naturally, the prefabricated module of Figure 3 can then be joined to other similar prefabricated modules, so as to further lengthen the path, obtaining a more complex heat exchanger 220, such as the one illustrated in Figure 4.

Thanks to the heat exchanger 220, at least part of the heat of the condensate produced in the evaporator 155 is therefore advantageously used for preheating the chopped tomato with peels and seeds, thereby reducing the energy expenditure required to carry out the subsequent enzymatic deactivation step and thus improving the overall energy efficiency of the tomato concentrate production process.

At the same time, the heat absorbed by the chopped tomato with peels and seeds advantageously decreases the temperature of the condensate, reducing the problems and costs associated with the disposal thereof.

In addition to the condensate, also the residual (or excess) vapour that has not been condensed inside the evaporator 155 comes out from the latter at high temperature. This temperature may, for example, be higher than 75°C in the case of vapour compression evaporators.

For this reason, even (or exclusively) the residual vapour coming out of the evaporator 155 can be advantageously used to heat the chopped tomato with peels and seeds, after the chopping step and before the extraction step.

As anticipated, this residual (or excess) vapour can be taken from the intermediate chamber 180 of the evaporator 155, after having been compressed (thus at a rather high temperature, e.g. greater than or equal to 80°C), and/or directly from the chamber 185, before being compressed (thus at a lower temperature, e.g. about 75°C).

In any case, in the embodiment illustrated in Figure 1, the residual vapour obtained from the evaporation of the tomato juice is used to preheat the chopped tomato with peels and seeds, before subjecting the latter to the enzymatic deactivation process.

For example, the aforesaid residual vapour can be used as a second preheating stage, i.e. to further heat the chopped tomato with peels and seeds that comes out from the heat exchanger 220 in which it has received heat from the condensate.

For this purpose, the plant 100 may comprise a heat exchanger 300 in which the chopped tomato with peels and seeds is placed in a heat exchange relation with the residual vapour.

In this way, while the chopped tomato with peels and seeds is being heated, the residual vapour cools and can partially condense.

The heat exchanger 300 may be a multi-tubular exchanger of the type referred to as a "blanching machine".

The heat exchanger 300 can be sized so as to raise the temperature of the chopped tomato with peels and seeds up to indicatively values comprised between 60°C and 70°C. However, it is not ruled out that, in some cases, the temperature at the outlet of the heat exchanger 300 may be lower than 60°C or higher than 70°C.

The condensate that comes out from the heat exchanger 300 can be disposed of in a sewer system, possibly after being conveyed (e.g. by gravity) inside a post-condenser 305, for example a water condenser, to further lower its temperature and/or to complete the condensation of the residual vapour.

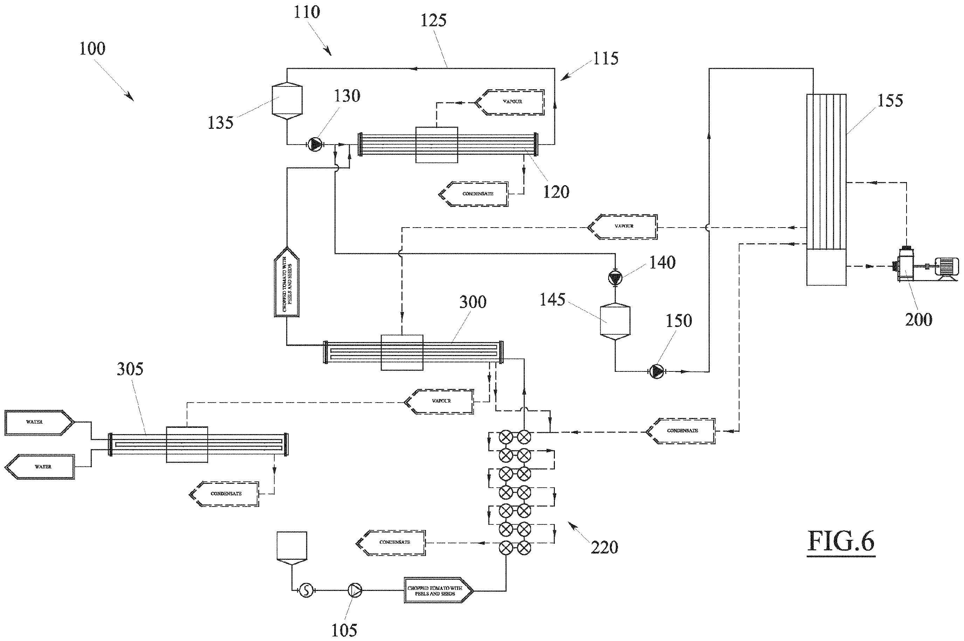

Alternatively, as illustrated in the variant of figure 6, the condensate coming out from the heat exchanger 300 (being usually at a temperature higher than 70°C) may be fed to the heat exchanger 200, for example added to the condensate coming from the evaporator 155, in order to placed it in a heat exchange relation with (and so concur to preheat) the chopped tomato with peels and seeds.

At the same time, the residual vapour leaving the heat exchanger 300 may be sent to the post-condenser 305 as outlined above.

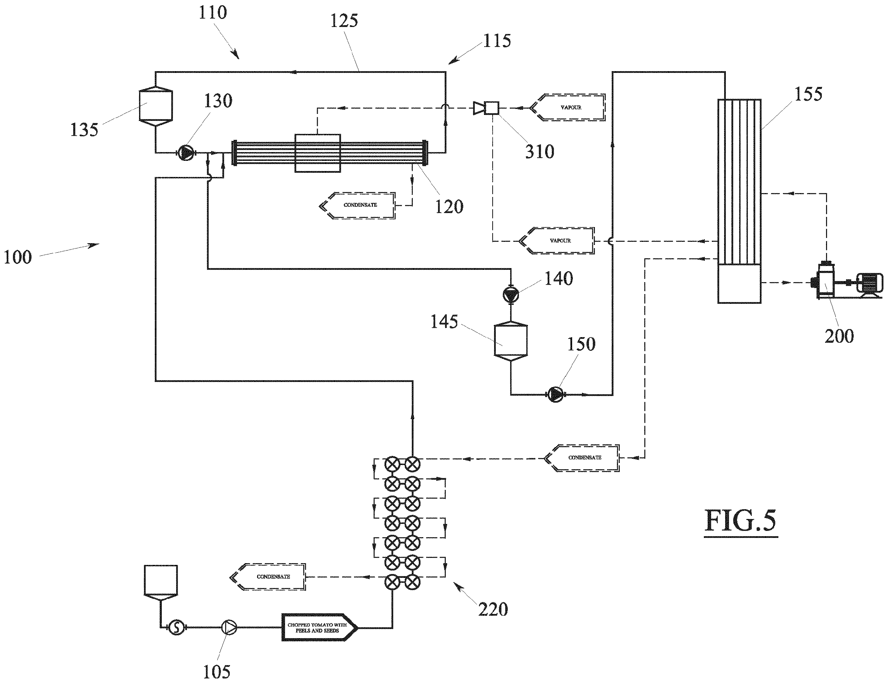

In the alternative embodiment illustrated in Figure 5, instead of carrying out a preheating stage, the residual (or excess) vapour obtained from the evaporation of the tomato juice, leaving the evaporator 155 uncondensed, can be used directly to heat the chopped tomato with peels and seeds in the enzymatic deactivation process.

In particular, the residual vapour can be conveyed and used as a heating vapour inside the heat exchanger 120 of the enzyme deactivator 110 described above.

Before this, however, the residual vapour can be advantageously compressed, so as to increase its temperature, up to sufficiently high values to obtain a more effective enzymatic deactivation of the chopped tomato with peels and seeds.

In particular, the compression of the residual vapour can be obtained by means of an ejector 310.

An ejector is a jet device in which a higher-pressure primary fluid, generally exploiting a Venturi effect, sucks and mixes with a lower-pressure secondary fluid, globally resulting in a fluid mixture at an intermediate pressure and temperature.

In this way, the ejector does not require any mechanical drive to compress the secondary fluid, but only uses the energy of the primary fluid.

In the case in question, the primary fluid can be vapour produced by a boiler, as already envisaged also in the first embodiment, which, by mixing in the ejector 310 with the residual vapour obtained from the evaporation of the tomato juice, globally produces a vapour flow at a sufficiently high temperature to perform the enzymatic deactivation of the chopped tomato with peels and seeds.

By recovering the heat of the vapour obtained from the evaporation of the tomato juice, the boiler will nevertheless consume less energy than if the residual (or excess) vapour were simply disposed of, without any recovery.

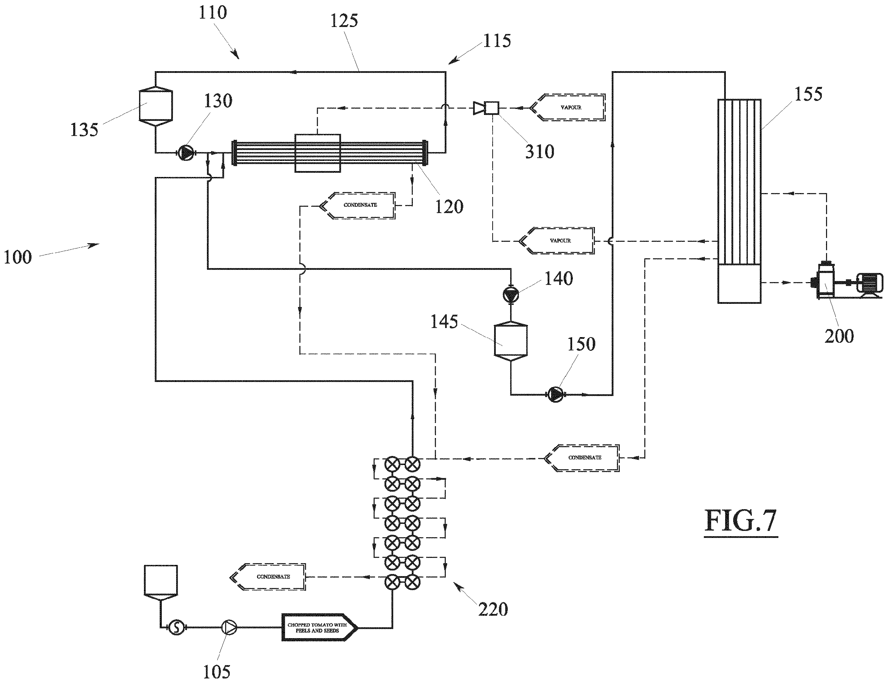

In this case, the heat exchanger 120 nevertheless produces acid condensates which, since they cannot be recovered directly in the boiler, can be advantageously conveyed to the heat exchanger 220, for example by adding them with the condensates coming from the evaporator 155, so as to be placed in a heat exchange relationship with (i.e. in such a way as to concur to pre-heat the) chopped tomato with peels and seeds, as illustrated in the variant of figure 7.

As an alternative or in addition to the vapour taken from the evaporator 155, other embodiments may provide for taking vapour directly from the storage tank 145 and for using directly this vapour to heat the chopped tomato with peels and seeds, after the chopping and before the extraction.

The vapour taken from the storage tank 145 may be used in the same manner as provided for the vapour taken from the evaporator 155 and outlined previously.

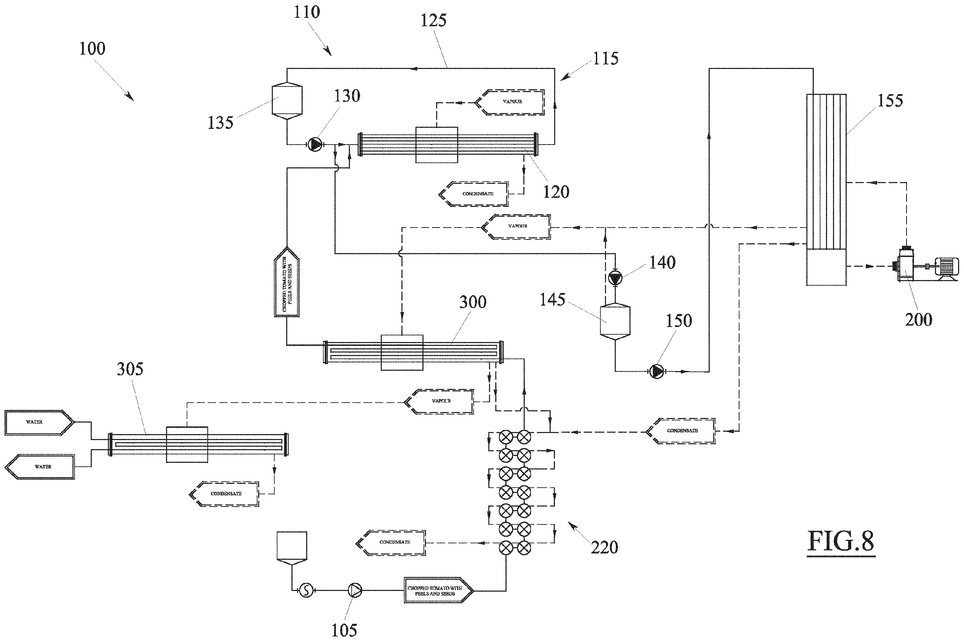

For example, the embodiment of figure 8 is completely analogous to that of figure 6, with the only difference that at least part of the vapour used to preheat the chopped tomato with peels and seeds, before subjecting the latter to the process of enzymatic deactivation, is taken from the storage tank 145.

In the preferred embodiment illustrated, this vapour is added to the vapour coming from the evaporator 155 but it is not ruled out that, in other embodiments, the heat exchanger 300 only receives vapour taken from the storage tank 145.

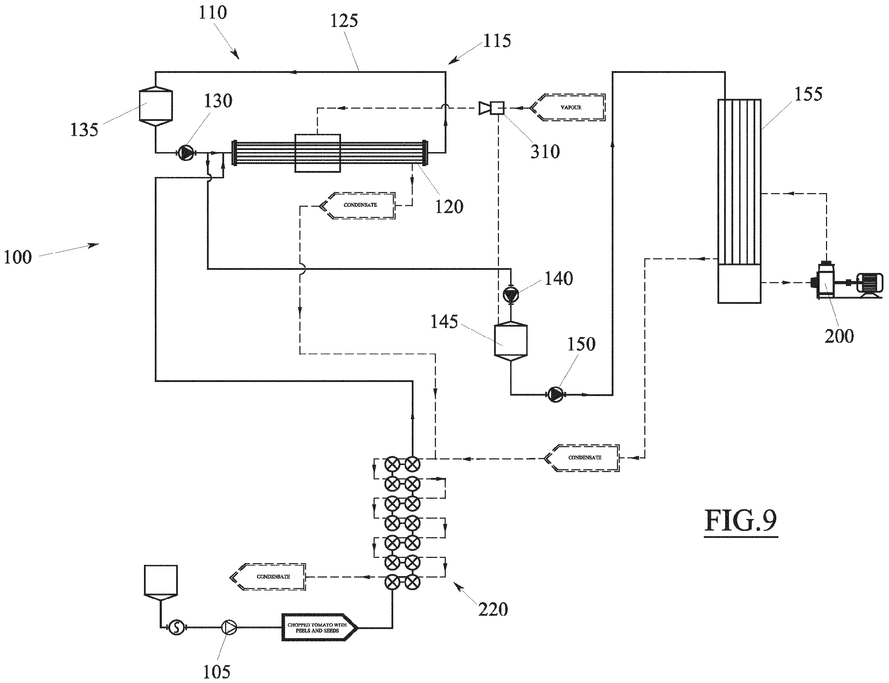

In turn, the embodiment of figure 9 is completely analogous to the embodiment of figure 7, again with the only difference that at least part (or preferably all) of the vapour used to heat the chopped tomato with peels and seeds in the process of enzymatic deactivation, is taken from the storage tank 145 rather than the evaporator 155.

One of the advantages of the embodiments of figures 8 and 9 is that the storage tank 145 can be brought on board of the enzymatic deactivator 110, so as to obtain an immediate connection between the storage tank 145 and the heat exchanger. 120 which exploits its vapours (therefore with lower costs, dispersions, etc.).

Another advantage is that, as previously indicated, the excess of vapours present in the storage tank 145 do not have to pass through the compressor 200, reducing consumption. Obviously, a person skilled in the art may make several technical-applicative modifications to all that above, without departing from the scope of the invention as hereinbelow claimed.

## Claims

1. A method for the production of tomato concentrate, comprising the steps of:
- chopping the tomato so as to obtain chopped tomato with peels and seeds,
- subjecting the chopped tomato with peels and seeds to an enzymatic deactivation process,
- subjecting the chopped tomato with peels and seeds to an extraction process to obtain a tomato juice,
- subjecting said tomato juice to an evaporation process to obtain a concentrated juice and vapour,
**characterized by**
- using said vapour to heat the chopped tomato with peels and seeds before subjecting it to the extraction process.

2. A method according to claim 1, wherein said vapour is used to preheat the chopped tomato with peels and seeds, before subjecting it to the enzymatic deactivation process.

3. A method according to claim 2, wherein the preheating of the chopped tomato with peels and seeds is obtained by placing the latter inside at least one heat exchanger in a heat exchange relation with said vapour.

4. A method according to claim 1, wherein said vapour is used to heat the chopped tomato with peels and seeds in the enzymatic deactivation process.

5. A method according to claim 4, wherein the enzymatic deactivation process provides that the chopped tomato with peels and seeds repeatedly passes through a heat exchanger, inside which it is placed in a heat exchange relation with the vapour obtained from the evaporation of the tomato juice.

6. A method according to claim 4, wherein said vapour is compressed, before being used to heat the chopped tomato with peels and seeds in the enzymatic deactivation process.

7. A method according to claim 6, wherein compression of said vapour is obtained by means of an ejector.

8. A method according to any one of the preceding claims, wherein said vapour is partially transformed into condensate, placing it in a heat exchange relation with other tomato juice in the evaporation process, before using it to heat the chopped tomato with peels and seeds.

9. A method according to claim 8, comprising the step of using said condensate to preheat the chopped tomato with peels and seeds before subjecting it to the enzymatic deactivation process.

10. A method according to claim 9, wherein the preheating obtained with the condensate is performed before heating the chopped tomato with peels and seeds with vapour.

11. A method according to claim 9, wherein the preheating of the chopped tomato with peels and seeds is obtained by placing the latter inside at least one heat exchanger in a heat exchange relation with the condensate obtained from the evaporation process.

12. A method according to claim 8, wherein said vapour is compressed, before being partially transformed into condensate.

13. A method according to claim 12, wherein vapour compression is obtained by means of a centrifugal turbine compressor.

14. A method according to any of the preceding claims, wherein at least part of the vapour used to heat the chopped tomato with peels and seeds is taken from a storage tank (145), in which the tomato juice is collected after the extraction.

15. A plant (100) for the production of tomato concentrate, comprising:
- a chopper (105) for chopping the tomato so as to obtain chopped tomato with peels and seeds,
- an enzyme deactivator (110) for subjecting the chopped tomato with peels and seeds to an enzymatic deactivation process,
- an extractor (140) for subjecting the chopped tomato with peels and seeds to an extraction process to obtain a tomato juice,
- means (145, 155) for subjecting said tomato juice to an evaporation process to obtain a concentrated juice and vapour,
**characterized by** further comprising
- at least one heat exchanger (120, 300) adapted to use said vapour to preheat the chopped tomato with peels and seeds before subjecting it to the extraction process.
